# EUROPEAN PATENT APPLICATION

(11) **EP 4 156 070 A1**
(43) Date of publication of application: **29.03.2023**
(21) Application number: 22198028.7
(22) Date of filing: 27.09.2022
(51) Int. Cl.: G06Q 40/03

(54) **INFORMATION PROCESSING APPARATUS, METHOD, AND PROGRAM**

(30) Priority: 27.09.2021 JP 2021156290
(71) Applicant: Rakuten Group, Inc., Setagaya-ku Tokyo 158-0094 (JP)
(72) Inventor: Wang, Xu, Tokyo, 158-0094 (JP)
(74) Representative: Hoffmann Eitle

(57) **Abstract**

[Problem] An object is to quantitatively evaluate effects of operations of prompting users for predetermined actions, and contribute to suppression of costs for operations.

[Means of Solution] An information processing apparatus includes an effect estimating unit that estimates an effect that a predetermined operation, directed to a user to prompt the user to execute a predetermined action, has on whether or not the user executes the action, and a condition outputting unit that outputs a condition relating to the operation directed to the user, on the basis of the effect that is estimated.

## Description

### [Technical Field]

The present disclosure relates to a technology for controlling operations directed to users.

### [Background Art]

Conventionally, operations such as placing telephone calls to customers by call center operators have been performed for the purpose of dunning regarding payment of credit card usage amounts, i.e., collecting debts (refer to Patent Literature 1). In addition, a dunning support technology is known that changes the tone of example texts used for dealing with customers by operators, in accordance with the time of day when the dunning work is carried out (refer to Patent Literature 2).

### [Citation List]

### [Patent Literature]

[Patent Literature 1] Japanese Patent Application Publication No. 2001-282994
[Patent Literature 2] Japanese Patent Application Publication No. 2010-224617

### [Summary of Invention]

### [Technical Problem]

Conventionally, in order to cause users to execute predetermined actions (e.g., transferring funds, depositing to an account, and so forth), operations (e.g., placing telephone calls to customers, and so forth) prompting the users to execute the predetermined actions are performed. However, while the operations prompting users to execute the predetermined actions are effective, a disadvantage is that execution of operations generates costs corresponding to the volume of operations.

With the foregoing problem in view, it is an object of the present disclosure to quantitatively evaluate effects of operations of prompting users for predetermined actions, and contribute to suppression of costs for operations.

### [Solution to Problem]

An example of the present disclosure is an information processing apparatus, including: an effect estimating unit that estimates an effect that a predetermined operation, directed to a user to prompt the user to execute a predetermined action, has on whether or not the user executes the action; and a condition outputting unit that outputs a condition relating to the operation directed to the user, on the basis of the effect that is estimated.

Also, an example of the present disclosure is a method of a computer executing: a training data acquisition step of acquiring training data, in which a score based on statistics relating to an execution rate of a predetermined action by a user that received a predetermined operation, out of a plurality of users having a predetermined attribute, and statistics relating to the execution rate of the action by a user that did not receive the operation, out of the plurality of users, is defined as a score indicating the effect of the operation directed to users having the attribute; and a machine learning step of creating a machine learning model on the basis of the training data.

The present disclosure can be comprehended as an information processing apparatus, a system, a method executed by a computer, or a program which a computer is caused to execute. In addition, the present disclosure can also be comprehended as a recording medium from which a computer, a device, a machine or the like can read such a program. In this case, the recording medium that is readable by a computer or the like refers to a recording medium which stores information such as data or a program by an electric, magnetic, optical, mechanical, or chemical function and which can be read by a computer or the like.

### [Effects of Invention]

According to the present disclosure, it is possible to quantitatively evaluate effects of operations of prompting users for predetermined actions, and contribute to suppression of costs for operations.

### [Brief Description of Drawings]

[Fig. 1] Fig. 1 is a schematic diagram illustrating a configuration of an information processing system according to an embodiment.
[Fig. 2] Fig. 2 is a diagram schematically illustrating a functional configuration of an information processing apparatus according to the embodiment.
[Fig. 3] Fig. 3 is a diagram showing a simplified concept of a decision tree of a machine learning model employed in the embodiment.
[Fig. 4] Fig. 4 is a diagram showing a relation between effects and risk that are estimated, and operation conditions, in the embodiment.
[Fig. 5] Fig. 5 is a flowchart showing a flow of machine learning processing according to the embodiment.
[Fig. 6] Fig. 6 is a flowchart showing a flow of operation conditions output processing according to the embodiment.
[Fig. 7] Fig. 7 is a flowchart showing a flow of a variation (1) of the operation conditions output processing according to the embodiment.
[Fig. 8] Fig. 8 is a flowchart showing a flow of a variation (2) of the operation conditions output processing according to the embodiment.

### [Description of Embodiments]

An embodiment of an information processing apparatus, a method, and a program, according to the present disclosure, will be described below with reference to the drawings. It should be noted, however, that the embodiment described below is example and does not limit the information processing apparatus, the method, and the program according to the present disclosure, to the specific configurations described below. When carrying out the present disclosure, specific configurations may be employed as deemed appropriate in accordance with a mode of implementation, and various types of improvements and modifications may be made.

In the present embodiment, an embodiment will be described regarding a case of carrying out the technology according to the present disclosure for an operation center managing system for dunning regarding payment of credit card usage amounts of which payments are late, and collecting debt. It should be noted, however, that systems to which the technology according to the present disclosure is applicable are not limited to operation center managing systems for dunning regarding payment of credit card usage amounts. The technology according to the present disclosure is broadly applicable to technology for controlling operations directed to users, and objects of application of the present disclosure are not limited to examples given in the embodiment.

Normally, payment of a credit card usage amount is performed by a method such as withdrawal from an account of a user on a withdrawal date every month, the user making a deposit by a specified date, or the like, but there are cases in which payment of the credit card usage amount is not completed by a stipulated date, due to a reason such as insufficient funds in the account of the user, the user not making a deposit by the specified date, or the like. Accordingly, operations are conventionally performed such as an operation center (call center) placing telephone calls, performing message transmission, or the like, to the customer, in order to dun with respect to the user for payment of the credit card usage amount and collect the debt.

Generally, operations directed to users are effective in order to avoid default (non-fulfilment of obligation), and the more the volume of operations is increased, the more the debt collection rate rises. However, meanwhile, the more the volume of operations is increased, the more the costs for operations, such as labor expenditures, system usage fees, system maintenance fees, and so forth, increase. Accordingly, with the foregoing problem in view, the system according to the present disclosure employs technology for suppressing costs relating to operations without lowering the debt collection rate. Note that while description will be made in the present embodiment by way of an example in which a predetermined operation primarily is placing a telephone call to a user, the content of the predetermined operation is not limited, and may be various types of operations for prompting the user to perform a predetermined action.

### <Configuration of System>

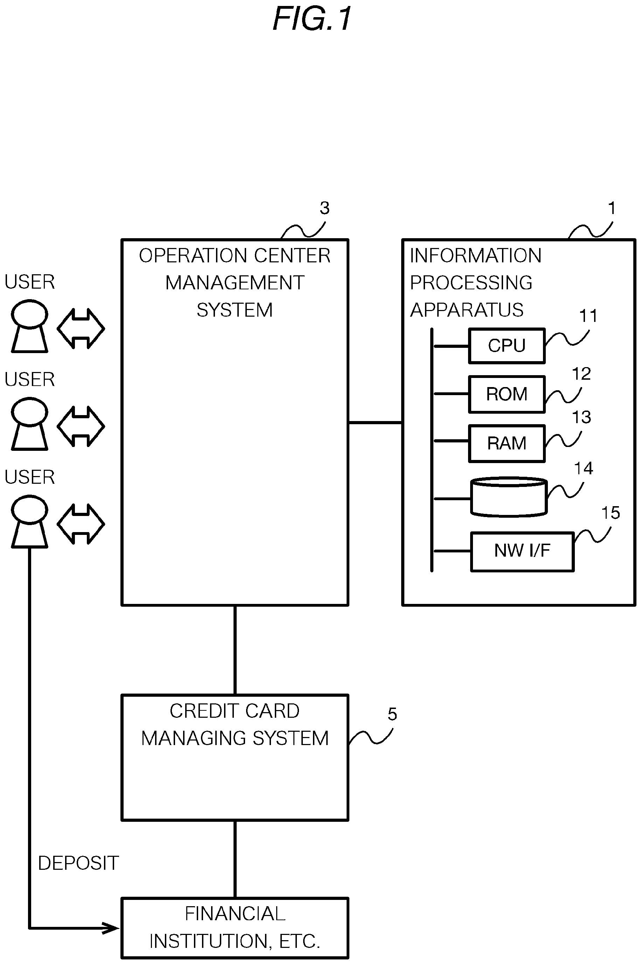

Fig. 1 is a schematic diagram illustrating a configuration of an information processing system according to the present embodiment. In the system according to the present embodiment, an information processing apparatus 1, an operation center management system 3, and a credit card managing system 5 are connected so as to be mutually communicable. An operation terminal (omitted from illustration) for performing operations following instructions from the operation center management system 3 is installed in an operation center, and an operator operates the operation terminal to carry out operations directed to a user. The user is a credit card user who deposits a credit card usage amount via a financial institution or the like, and payment history data of the credit card usage amount is notified to the operation center management system 3 via the credit card managing system 5.

The information processing apparatus 1 is an information processing apparatus for outputting data for controlling operations by the operation center management system 3. The information processing apparatus 1 is a computer that includes a central processing unit (CPU) 11, a read only memory (ROM) 12, a random access memory (RAM) 13, a storage device 14 such as an electrically erasable and programmable read only memory (EEPROM) or a hard disk drive (HDD), a communication unit 15 such as a network interface card (NIC), and so forth. Note however, that with regard to the specific hardware configuration of the information processing apparatus 1, omissions, substitutions, and additions may be made as appropriate, in accordance with a mode of implementation. Also, the information processing apparatus 1 is not limited to an apparatus made up of a single housing. The information processing apparatus 1 may be realized by a plurality of devices, using so-called cloud or distributed computing technology or the like.

The operation center management system 3, the credit card managing system 5, and the operation terminal are each a computer including a CPU, ROM, RAM, a storage device, a communication unit, an input device, an output device, and so forth (omitted from illustration). Each of these systems and terminal is not limited to a device made up of a single housing. These systems and terminal may be realized by a plurality of devices, using so-called cloud or distributed computing technology or the like.

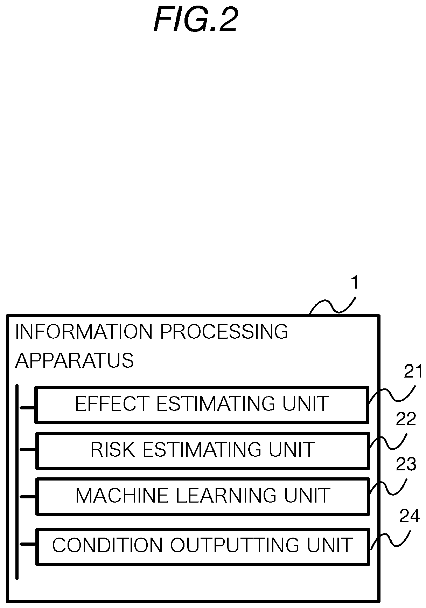

Fig. 2 is a diagram schematically illustrating a functional configuration of the information processing apparatus 1 according to the present embodiment. In the information processing apparatus 1, a program recorded in the storage device 14 is read out to the RAM 13 and executed by the CPU 11, and each piece of hardware included in the information processing apparatus 1 is controlled, thereby functioning as an information processing apparatus including an effect estimating unit 21, a risk estimating unit 22, a machine learning unit 23, and a condition outputting unit 24. Note that in the present embodiment and other embodiments that will be described later, the functions that the information processing apparatus 1 has are executed by the CPU 11, which is a general-use processor, but part or all of these functions may be executed by one or a plurality of dedicated processors.

The effect estimating unit 21 estimates the effects that a predetermined operation, directed to a user to prompt the user to execute a predetermined action, has on whether or not the user executes the action. In the present embodiment, the predetermined action is payment of a credit card usage amount regarding which payment is late. Note that the specific payment means is not limited, and may be a transfer to a specified account, payment at a specified teller window, or the like. Also, in the present embodiment, the predetermined operation is a telephone call placed for dunning regarding payment of the credit card usage amount regarding which payment is late. Note that the telephone call placed to the user may be an automated telephone call using a recording or machine-generated voice, or may be a telephone call in which an operator (human) converses with the user. Further, in the present embodiment, the effect estimating unit 21 estimates the effects of the operation, using a machine learning model that outputs, in response to an input of one or a plurality of user attributes regarding an object user, a causality score (causality score) indicating the effects of the operation directed to this user.

The risk estimating unit 22 estimates risk based on the probability that the user will not execute the above-described predetermined action. The representation method of the risk is not limited, and various indices may be employed, but for example, the risk can be expressed using the odds of the debt defaulting without being collected. Further, in the preset embodiment, the risk estimating unit 22 estimates risk based on the probability that the user will not execute the action, using a machine learning model that, in response to an input of one or a plurality of user attributes regarding the object user, outputs a risk index indicating the odds of the debt regarding this user defaulting without being collected. Note, however, that risk may be estimated following predetermined rules, for example, without using a machine learning model. For example, the risk may be acquired by holding in advance a value that corresponds to each user attribute or combination of user attributes, and reading out this value. Also, an index other than the odds of defaulting may be employed for the index indicating the risk. For example, the risk may be classified (ranked), and which class (rank) may be used as the index.

The machine learning unit 23 generates and/or updates the machine learning model used for effect estimation by the effect estimating unit 21 and the machine learning model used for risk estimation by the risk estimating unit 22. The machine learning model for effect estimation is a machine learning model that, in a case in which data of one or a plurality of user attributes regarding the object user is input, outputs a causality score indicating the extent of effects of the operation directed to the user. Also, the machine learning model for risk estimation is a machine learning model that, in a case in which data of one or a plurality of user attributes regarding the object user is input, outputs a risk index indicating the degree of risk based on the probability that the user will not execute the action. User attributes input to these machine learning models may include, for example, demographic attributes, behavioral attributes, or psychographic attributes. Now, examples of demographic attributes are the sex (gender), family makeup, age, of the user, and so forth, examples of behavioral attributes are whether or not a cash advance user, whether or not a revolving credit user, deposit/withdrawal history regarding a predetermined account, history of transactions relating to some sort of product including gambling or lotteries (may include online transaction history in an online marketplace or the like), and so forth, and examples of psychographic attributes are tendencies relating to gambling or lotteries, and so forth. Note, however, that attributes of users that can be used are not limited to those exemplified in the present embodiment. For example, "time required for operation (placing a telephone call, etc.)" and "credit card usage amount" may also be used as attributes.

When generating and/or updating the machine learning model for effect estimation, the machine learning unit 23 creates the machine learning model on the basis of training data (data for machine learning), in which a score based on statistics relating to the rate of execution of the action (debt collection rate) by users who received the operation out of a plurality of users having a predetermined attribute and statistics relating to the rate of execution of the action by users who did not receive the operation out of the plurality of users is defined as a causality score indicating the effects of the operation directed to the user having this attribute, for each user attribute. In the present embodiment, in a case in which the content of the operation is placing a telephone call to a user as an example, a causality score based on difference between the statistics is calculated, by an expression of "(debt collection rate in a case in which the user was telephoned) - (debt collection rate in a case in which the user was not telephoned)", and the calculated causality score is combined with corresponding attribute data of the user and input to the machine learning unit 23 as training data. Note that in the present embodiment, description will be made by way of an example of using average values as statistics. However, statistical indices such as, for example, modal value, median value, or the like, may be used as statistics. Here, statistics regarding the rate of execution of the action may be based on the past debt collection rate within a predetermined period (e.g., a predetermined month) for each user. Also, in the present embodiment, the causality score based on difference between the statistics is to be calculated, but in cases in which no statistically significant difference is found in this difference, the causality score may be set to zero or approximately zero. Now, known statistical techniques may be employed for this determination regarding whether or not there is a significant difference. For example, standard error and confidence interval may be taken into considerations regarding sets of average collection rate of the user for each month, to take into consideration statistical significance regarding change in collection rate in accordance with whether or not telephone calls were placed. Thus, the causality score can be calculated taking into consideration variance in average collection rate among users within the same group.

In creating the training data, a user who has been telephoned once can never be a user who was not telephoned thereafter, so with regard to one user, only one of a collection rate in a case in which the user was telephoned and a collection rate in a case in which the user was not telephoned can be acquired. Accordingly, training data for effects of placing telephone calls is created for each group of users having common attributes. That is to say, the causality score indicating the effects of placing telephone calls with respect to a user group made up of users having a certain common attribute is acquired by, for example, dividing the plurality of users having this common attribute into a first sub-user group that was telephoned and a second sub-user group that was not telephoned, calculating an average value of debt collection rate from the first sub-user group that was telephoned and an average value of debt collection rate from the second sub-user group that was not telephoned, respectively, and calculating the difference between these average values in collection rate by the above-described expression. For example, in a case in which the average value of debt collection rate from the first sub-user group that was telephoned is 80%, and the average value of debt collection rate from the second sub-user group that was not telephoned is 70%, the causality score indicating the effects of placing telephone calls to the user group is "10".

A framework for generating machine learning models that can be employed in carrying out the technology according to the present disclosure is based on an ensemble learning algorithm, as an example. A machine learning framework (e.g., LightGBM) based on a gradient boosting decision tree (Gradient Boosting Decision Tree: GBDT), for example, may be employed for this framework. In other words, for this framework, a machine learning framework that is based on a decision tree model in which error between correct answer and predicted value is carried over between weak learners (weak classifiers) before and after, may be employed. Predicted value here refers to predicted value of causality score or risk index, as examples. Note that besides LightGBM, boosting techniques such as XGBoost, CatBoost, and so forth, may be employed in this framework. According to frameworks using decision trees, machine learning models that have relatively high performance can be generated with little parameter adjustment effort as compared to frameworks using neural networks. It should be noted, however, that the framework for generating machine learning models that can be employed in carrying out the technology according to the present disclosure is not limited to that exemplified in the present embodiment. For example, instead of the gradient boosting decision tree, another learner, such as random forest or the like, may be employed as the learner, and a learner that is not referred to as a so-called weak learner, such as a neural network and so forth, may be employed. Also, in particular, in a case of employing a learner that is not referred to as a so-called weak learner, such as a neural network and so forth, ensemble learning does not have to be employed.

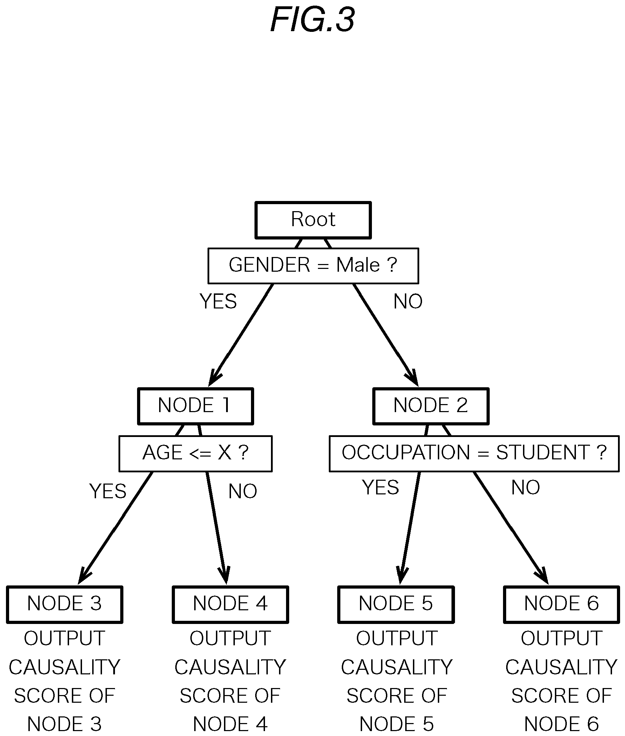

Fig. 3 is a diagram showing a simplified concept of a decision tree of the machine learning model employed in the present embodiment. In a case of employing a machine learning framework with gradient boosting based on a decision tree algorithm, optimization of the branching condition of each node of the decision tree is performed. Specifically, in a machine learning framework with gradient boosting based on a decision tree algorithm, a causality score indicating effects of an operation is calculated for each of user groups that have attributes indicated by two child nodes, respectively, branched from one parent node, and the branching condition of the parent node is optimized such that the difference of these causality scores is large (e.g., such that the difference is maximal, or is no less than a predetermined threshold value), which is to say, such that the two child nodes are clearly branched. For example, in a case in which the attribute indicated as the branching condition of a node is age, the age set as the threshold value for branching may be changed, the branching condition may be changed to an attribute other than age, or the like. Thus, recursively optimizing the branching conditions of all nodes of the decision tree enables estimation precision of effects of the operation to be improved.

When generating and/or updating the machine learning model for risk estimation, the machine learning unit 23 creates the machine learning model on the basis of training data, in which statistics relating to the rate of default occurring for a plurality of users having a predetermined attribute (Average value in the present embodiment. However, statistical indices such as, for example, modal value, median value, or the like, may be used.) is defined as a risk index indicating the degree of risk of users having this attribute, for each attribute of the user. The calculated risk index is combined with corresponding attribute data of the user and input to the machine learning unit 23 as training data. Also, the framework for the machine learning model generation that can be employed is not limited in generating or updating of the machine learning model for risk estimation as well, and a machine learning framework with gradient boosting based on a decision tree algorithm may be employed, in the same way as in generating and/or updating the machine learning model for effect estimation described above.

The condition outputting unit 24 decides and outputs conditions relating to an operation to be executed at the operation center regarding the user (hereinafter referred to as "operation conditions"), on the basis of the estimated effects and risk (in the present embodiment, causality score and risk index). In the present embodiment, operation conditions may be at least any one of whether or not there is need to execute operations, the count of times of execution of the operations, the order of execution of the operations, means of contacting the user in the operations, and/or contents at the time of contacting the user in the operations. Here, examples of means of contacting include placing telephone calls, performing message transmission, and so forth, and contents at the time of contacting include contents to be communicated to the user when placing a telephone call and contents described in a message.

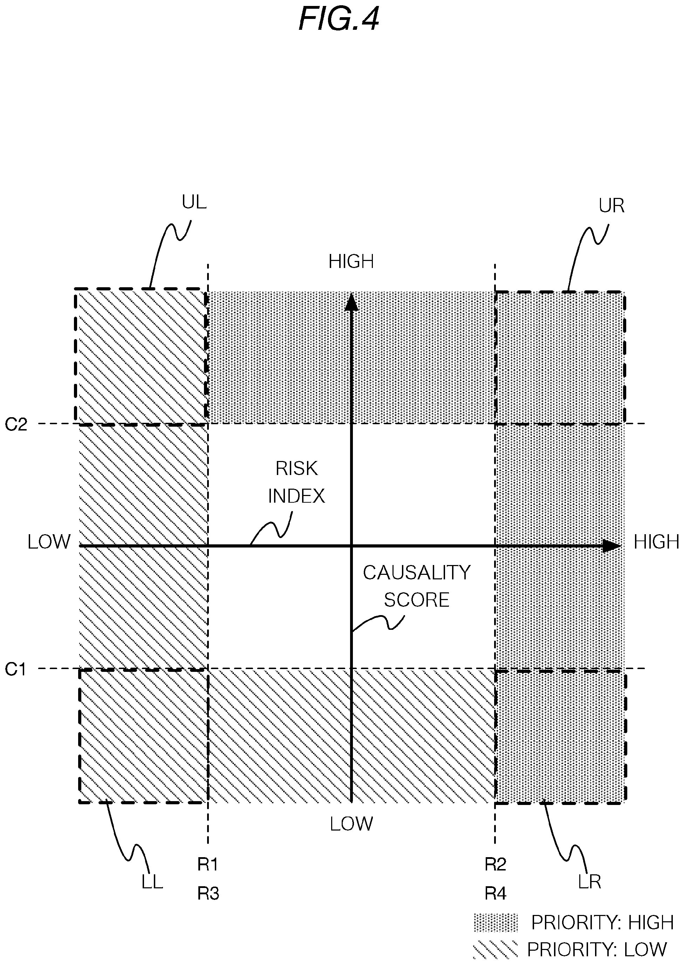

Fig. 4 is a diagram showing a relation between effects and risk that are estimated, and operation conditions, in the present embodiment. Basically, the condition outputting unit 24 outputs operation conditions that yield higher priority with regard to at least part of operations directed to users with higher estimated effects and operations directed to users with higher estimated risks. Also, the condition outputting unit 24 outputs operation conditions that yield lower priority with regard to at least part of operations directed to users with lower estimated effects and operations directed to users with lower estimated risks.

Priority here is a measure of the degree of operations being performed with priority, which is set with respect to users or operations directed to the user. The higher the priority of a user is, the higher the possibility or frequency of receiving an operation is, and the lower the priority of a user is, the lower the possibility or frequency of receiving an operation is. Specifically, the condition outputting unit 24 outputs, as conditions that yield higher priority, operation conditions in which this operation is set to execution required, the count of times of execution of this operation is increased, the order of execution of this operation is moved up, or the means of contacting the user or the content of contact in this operation is changed to that with higher costs or effects. Also, the condition outputting unit 24 outputs, as conditions that yield lower priority, operation conditions in which this operation is set to execution not required, the count of times of execution of this operation is decreased, the order of execution of this operation is moved down, or the means of contacting the user or the content of contact in this operation is changed to that with lower costs or effects.

In the present embodiment, the condition outputting unit 24 compares the estimated causality score with a threshold value set in advance regarding the causality score and compares the estimated risk index with a threshold value set in advance regarding the risk index, and decides and outputs operation conditions in accordance with the results of comparisons. Specifically, in the example illustrated in Fig. 4, a threshold value C1, and a threshold value C2 that is greater than the threshold value C1, are set for the causality score, and a threshold value R1 (first threshold value), and a threshold value R2 (second threshold value) that is greater than the threshold value R1, are set for the risk index. Also, with respect to the risk index, a threshold value R3 for determining whether or not to be subject to operation conditions setting that is in accordance with causality score, and a threshold value R4 for determining users to be the object of being set with operation conditions regarding high priority regardless of causality score, are further set. Note that in the present embodiment, description will be made regarding an example in which the same value is used for the threshold values R1 and R3, and the same value is used for the threshold values R2 and R4 (see Fig. 4), but different values may be used for each of these threshold values.

Now, cases in which operation conditions regarding high priority are output will be described.
Case 1: The condition outputting unit 24 decides and outputs operation conditions regarding high priority with regard to at least part of users of which the causality score is the threshold value C2 or higher, since effects of the operation are high.
Case 2: Also, the condition outputting unit 24 decides and outputs operation conditions regarding high priority with regard to at least part of users of which the risk index is the threshold value R2 or higher, since the risk is high.
Case 3: In particular, the condition outputting unit 24 may decide and output operation conditions regarding highest priority with regard to users of which the causality score is the threshold value C2 or higher and also the risk index is the threshold value R2 or higher (see region UR indicated by dashed lines in Fig. 4).
Case 4: Note however, that the condition outputting unit 24 does not have to output operation conditions that would yield high priority for users regarding which the estimated risk index is lower than the threshold value R3, since the possibility of defaulting is low to begin with. In a case in which raising cost suppression effects is desired, operation conditions regarding low priority or operation conditions regarding mid-level priority are preferably decided and output for users regarding which the risk index is lower than the threshold value R3, regardless of causality score (region UL indicated by dashed lines in Fig. 4 has a causality score of C2 or higher, but the risk index is lower than R3, and accordingly is not the object of operation conditions regarding high priority). Accordingly, the effect estimating unit 21 may estimate effects of the operation with regard to users of which the risk index is estimated to be the threshold value R3 (third threshold value) or higher, and not estimate effects of the operation (omit estimation processing) with regard to users of which the risk index is estimated to be lower than the threshold value R3 (third threshold value).

Also, cases in which operation conditions regarding low priority are output will be described.
Case 5: The condition outputting unit 24 decides and outputs operation conditions regarding low priority with regard to at least part of users of which the causality score is lower than the threshold value C1, since effects of the operation are low.
Case 6: Also, the condition outputting unit 24 decides and outputs operation conditions regarding low priority with regard to at least part of users of which the risk index is lower than the threshold value R1, since the risk is low.
Case 7: In particular, the condition outputting unit 24 may decide and output operation conditions regarding lowest priority with regard to users of which the causality score is lower than the threshold value C1 and also the risk index is lower than the threshold value R1 (see region LL indicated by dashed lines in Fig. 4).
Case 8: Note however, that the condition outputting unit 24 does not have to output operation conditions that would yield lower priority for users regarding which the estimated risk index is the threshold value R4 or higher, since the possibility of defaulting is high to begin with. Preferably, operation conditions regarding high priority are decided and output for users regarding which the risk index is the threshold value R4 or higher, regardless of causality score (region LR indicated by dashed lines in Fig. 4 has a causality score of lower than C1, but the risk index is R4 or higher, and accordingly is not the object of operation conditions regarding low priority).

Accordingly, in the example shown in Fig. 4, the operation priority is raised for high-risk users, and mid-risk and high-effect users, and the operation priority is lowered for low-risk users, and mid-risk and low-effect users. Note that in the above-described example, description is made regarding an example in which regions are sectioned on the basis of threshold values, and common operation conditions are decided for users belonging to a given region, but different operation conditions may be set for each user in a given region, or for each user. For example, operation conditions may be made to differ with a gradient in accordance with the height of causality score and/or risk index, even within the same region.

Note that the volume of operations (the total count of operations and the count of users who are the object of operations) by the operation center management system 3 can be changed by adjusting the above-described threshold values. For example, the volume of operations can be increased by lowering at least one or more of the threshold value C1, the threshold value C2, the threshold value R1, and the threshold value R2, and the volume of operations can be reduced by raising at least one or more of the threshold value C1, the threshold value C2, the threshold value R1, and the threshold value R2.

### <Flow of Processing>

Next, the flow of processing executed by the information processing system according to the present embodiment will be described. Note that the specific contents and execution orders of processing described below are examples for carrying out the present disclosure. Specific contents and execution order of the processing can be selected as appropriate, in accordance with the embodiment of the present disclosure.

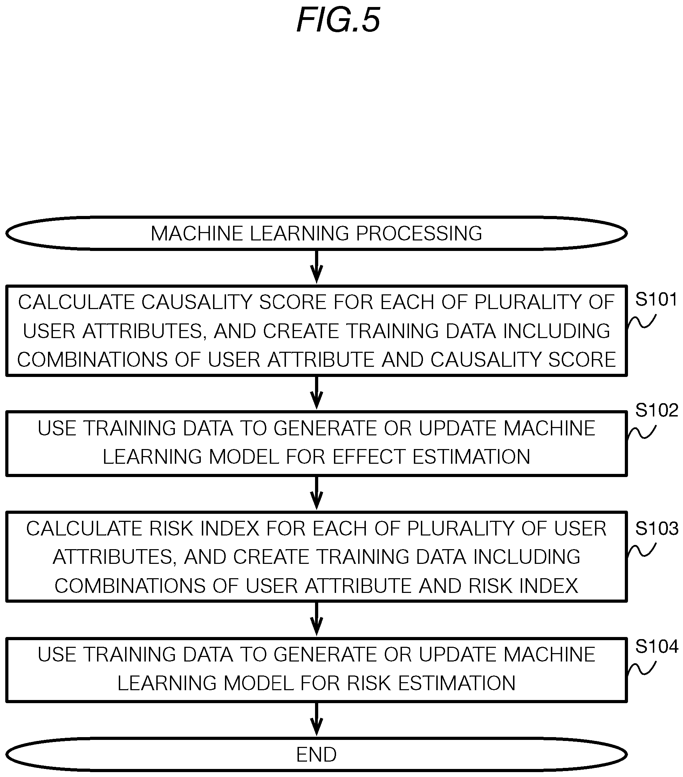

Fig. 5 is a flowchart showing a flow of machine learning processing according to the present embodiment. The processing shown in this flowchart is executed at a timing specified by an administrator of the operation center management system 3.

In step S101 and step S102, a machine learning model used for effect estimation is generated and/or updated. The machine learning unit 23 calculates the causality score for each of a plurality of user attributes, on the basis of attribute data of users, operation history data, and payment history data of credit card usage amount, accumulated in the past in the operation center management system 3 or the credit card managing system 5, and creates training data that includes combinations of the user attribute and the causality score (step S101). Here, the operation history data includes data that enables comprehension, with respect to each user, whether or not an operation was performed directed to that user, and the payment history data includes data that enables comprehension, with respect to each user, whether or not there was payment of the credit card usage amount (whether or not defaulting) of that user. The machine learning unit 23 inputs the created training data into the machine learning model, and generates or updates the machine learning model used for effect estimation by the effect estimating unit 21 (step S102). Subsequently, the processing advances to step S103.

In step S103 and step S104, a machine learning model used for risk estimation is generated and/or updated. The machine learning unit 23 calculates the risk index for each of a plurality of user attributes, on the basis of attribute data of users, operation history data, and payment history data of credit card usage amount, accumulated in the past in the operation center management system 3 or the credit card managing system 5, and creates training data that includes combinations of the user attribute and the risk index (step S103). The machine learning unit 23 then inputs the created training data into the machine learning model, and generates or updates the machine learning model used for risk estimation by the risk estimating unit 22 (step S104). Subsequently, the processing shown in this flowchart ends.

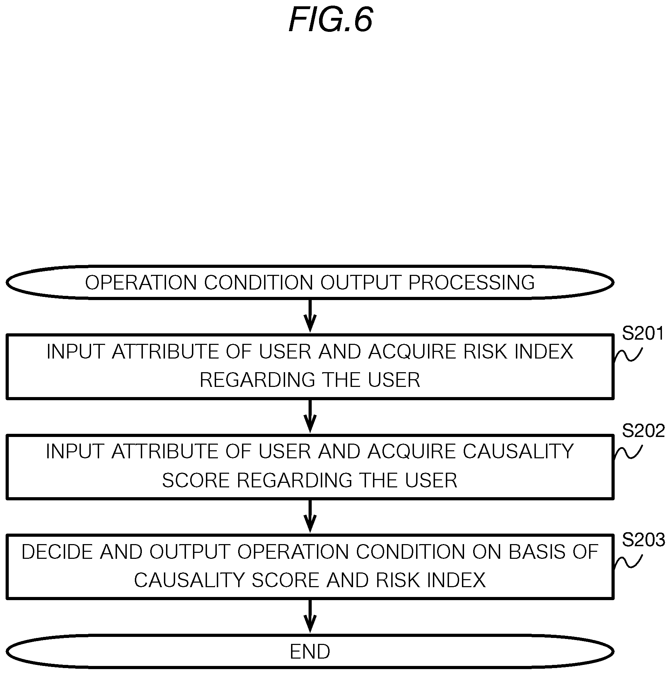

Fig. 6 is a flowchart showing a flow of operation conditions output processing according to the present embodiment. The processing shown in this flowchart is executed at a timing set in advance each month. More specifically, the execution timing of the processing is set to a timing that is after the payment stipulation date for the credit card usage amount, and also before a scheduled date for execution of operations directed to delinquent users.

In step S201 and step S202, effects of operations, and risk based on the probability of users not executing actions, are estimated. The risk estimating unit 22 inputs data of one or a plurality of user attributes relating to an object user to the machine learning model generated and/or updated in step S104, and acquires a risk index corresponding to the user as output from the machine learning model, for each of a plurality of users (step S201). Also, the effect estimating unit 21 inputs data of one or a plurality of user attributes relating to an object user to the machine learning model generated and/or updated in step S102, and acquires a causality score corresponding to the user as output from the machine learning model, for each of a plurality of users (step S202) . Thereafter, the processing advances to step S203.

In step S203, operation conditions are decided and output. The condition outputting unit 24 decides operation conditions on the basis of the causality score and the risk index respectively estimated in step S201 and step S202, and outputs these to the operation center management system 3. In the present embodiment, the condition outputting unit 24 identifies and outputs operation conditions mapped to causality score and risk index in advance. Note however, that the decision method of operation conditions is not limited to the exemplification in the present embodiment. For example, operation conditions may include a value calculated by inputting causality score and risk index to a predetermined function. Thereafter, the processing shown in this flowchart ends.

Upon operation conditions being output, the operation center management system 3 manages operations regarding the object user following the operation conditions, and the operation terminal executes operations following the instructions output by the operation center management system 3.

### <Effects>

According to the present embodiment, setting priorities of operation conditions in accordance with operation effects and risk for each user, and suppressing operations to users with low effects or risks enable costs regarding operations to be suppressed without reducing the debt collection rate. That is to say, according to the present disclosure, costs for operations can be suppressed without reducing effects of operations of prompting users for predetermined actions. Also, according to the present embodiment, raising the debt collection rate while suppressing costs can be anticipated by increasing operations directed to users with high effects or risks.

### <Variations of Operation Conditions Output Processing>

While the flow of operation conditions output processing has been briefly described with reference to Fig. 6 in the above-described embodiment, the operation conditions output processing may be processed as follows in further detail.

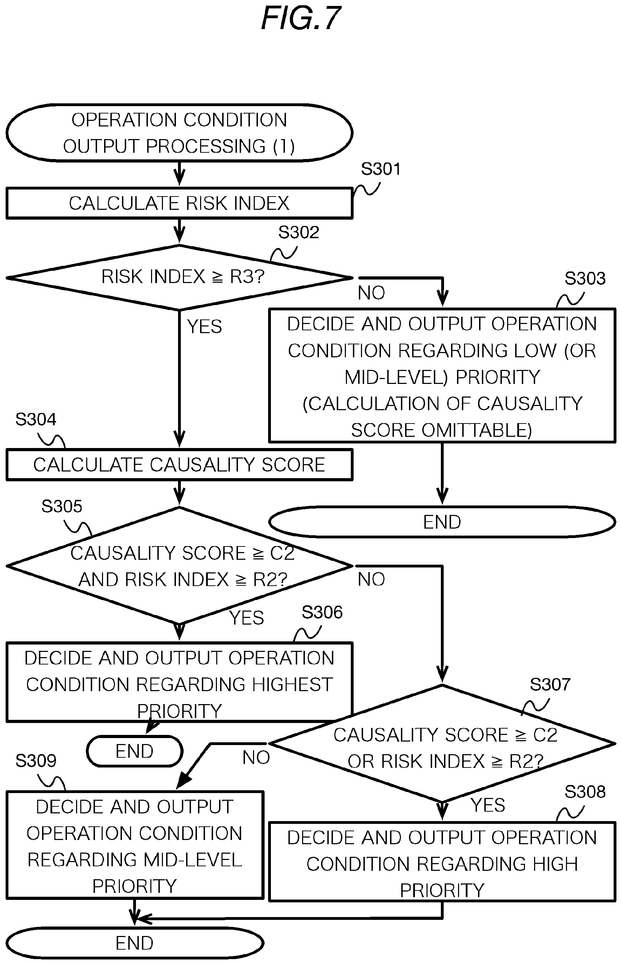

Fig. 7 is a flowchart showing the flow of operation conditions output processing in the present embodiment, in a case of employing the determining technique according to cases 1 to 4, described with reference to Fig. 4. In the example shown in Fig. 7, it can be seen that in a case in which a risk index calculated by the risk estimating unit 22 regarding a user having a certain attribute (step S301) is lower than the threshold value R3 (third threshold value) (NO in step S302), calculation of the causality score by the effect estimating unit 21 is omitted, and operation conditions regarding the low (or mid-level) priority are decided and output (step S303).

In a case in which the risk index calculated regarding this user is the threshold value R3 (third threshold value) or higher (YES in step S302), the causality score is calculated (step S304), and in a case in which the causality score is the threshold value C2 or higher and the risk index is the threshold value R2 or higher (YES in step S305), operation conditions regarding the highest priority are decided and output (step S306), while in a case in which the causality score is the threshold value C2 or higher, or the risk index is the threshold value R2 or higher (YES in step S307), operation conditions regarding the high priority are decided and output (step S308). Note that in a case in which the causality score is lower than the threshold value C2 and the risk index is lower than the threshold value R2, operation conditions regarding mid-level priority are decided and output (step S309).

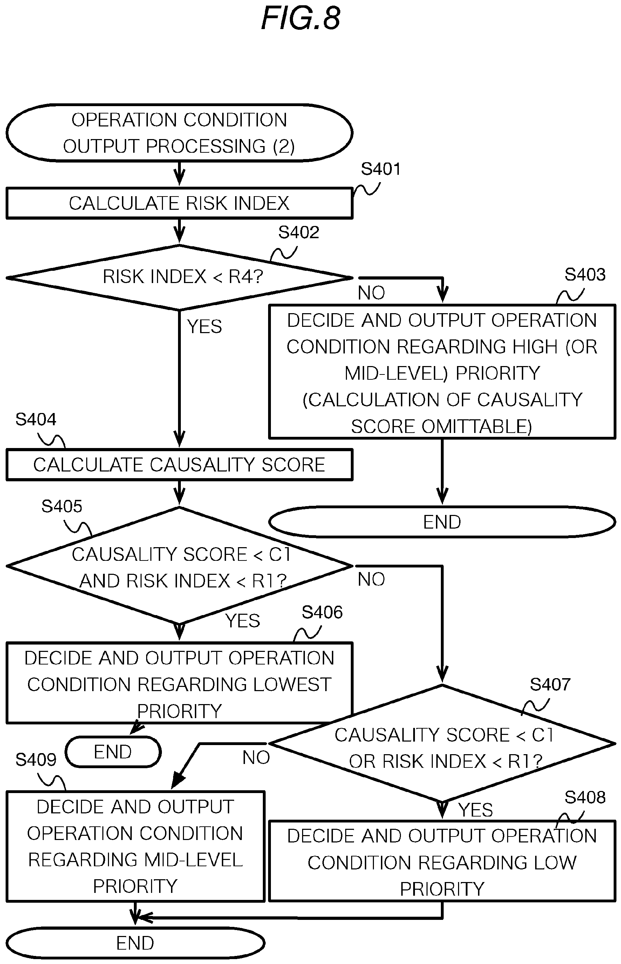

Fig. 8 is a flowchart showing the flow of operation conditions output processing in the present embodiment, in a case of employing the determining technique according to cases 5 to 8, described with reference to Fig. 4. In the example shown in Fig. 8, it can be seen that in a case in which a risk index calculated by the risk estimating unit 22 regarding a user having a certain attribute (step S401) is the threshold value R4 or higher (NO in step S402), calculation of the causality score by the effect estimating unit 21 is omitted, and operation conditions regarding the high (or mid-level) priority are decided and output (step S403).

In a case in which the risk index calculated regarding this user is lower than the threshold value R4 (YES in step S402), the causality score is calculated (step S404), and in a case in which the causality score is lower than the threshold value C1 and the risk index is lower than the threshold value R1 (YES in step S405), operation conditions regarding the lowest priority are decided and output (step S406), while in a case in which the causality score is lower than the threshold value C1, or the risk index is lower than the threshold value R1 (YES in step S407), operation conditions regarding the low priority are decided and output (step S408). Note that in a case in which the causality score is the threshold value C1 or higher and the risk index is the threshold value R1 or higher, operation conditions of which priority is mid-level are decided and output (step S409).

### <Other Variations>

Although an example in which the operation directed to the user is placing a telephone call has been described in the above-described embodiment, types of operations directed to users are not limited to placing a telephone call. For example, message transmission may be employed as a type of operation directed to the user. Note that the means for message transmission here is not limited, and an email system, short message service (SMS), or social networking service (SNS) message exchange services or the like may be used.

Also, although an example has been described in the above-described embodiment in which operation conditions are decided on the basis of effects estimated with regard to one type of operation (telephone call), operation conditions may be decided on the basis of effects estimated with regard to each of a plurality of types of operations (e.g., telephone call and message transmission). In this case, the effect estimating unit 21 estimates first effects that a first operation (e.g., telephone call) directed to a user to prompt the user to execute a predetermined action has on whether or not the user executes the action, and second effects that a second operation (e.g., message transmission) directed to the user to prompt the user to execute the predetermined action has on whether or not the user executes the action, and the condition outputting unit 24 outputs operation conditions regarding the user, on the basis of the estimated first effects and second effects.

In this case, the machine learning model for estimating the effects of operations is also generated and updated for each type of operation. For example, in a case in which the first operation is placing a telephone call and the second operation is message transmission, an effects estimation machine learning model for a telephone call, and an effects estimation machine learning model for a message transmission may be generated and updated.

Further, in a case in which operation conditions are decided on the basis of effects estimated for each of a plurality of types of operations, an operation of a type regarding which effects on the user are high may be selected from the plurality of types of operations. In this case, the condition outputting unit 24 outputs operation conditions including whether to perform the first operation or to perform the second operation with regard to the user, on the basis of the first effects and the second effects that are estimated. More specifically, the first effects (causality score relating to the first operation) and the second effects (causality score relating to the second operation) obtained regarding the object user can be compared, and the operation of a type of which the causality score is higher can be selected as the operation of a type regarding which effects on the user are high.

Also, an example has been described in the above-described embodiment in which the two axes of causality score indicating effects of operations and risk index indicating risk are used as evaluation axes for deciding operation conditions, but it is sufficient for at least effects of operations to be included in evaluation axes for deciding operation conditions in the technology according to the present disclosure, and other evaluation axes may be employed, and also three or more evaluation axes may be employed. For example, (1) a third index other than the risk index may be employed as an index combined with the causality score, (2) a third index may be employed in addition to the causality score and the risk index, and (3) three axes of the causality score for telephone call, the causality score for message transmission, and the risk index, may be employed.

Also, although an example has been described in the above-described embodiment in which the difference between the action execution rate of the sub-user group that received an operation and the action execution rate of the sub-user group that did not receive the operation is used as the causality score, a causality score calculated by another method may be used as the causality score. For example, at the time of generating and/or updating the machine learning model for effects estimation, the machine learning unit 23 may create the machine learning model on the basis of training data in which a score based on statistics relating to the execution rate of an action by users that made a predetermined reaction as to an operation, out of a plurality of users having a predetermined attribute, and statistics relating to the execution rate of the action by users that did not make the predetermined reaction, out of the plurality of users, is defined as the causality score regarding users having this attribute, for each user attribute. As an example, the causality score is calculated in this variation by an expression of "(debt collection rate in a case of the user performing a predetermined reaction) - (debt collection rate in a case of the user not performing the predetermined reaction)". In this case, the condition outputting unit 24 may output conditions relating to the operation on the basis of whether or not the user made a reaction, the contents thereof, and so forth, and a causality score according to the reaction. At this time, adjustment of the priority of operation conditions output by the condition outputting unit 24 may be performed using the relation between the causality score and the priority described with reference to Fig. 4.

Now, the predetermined reaction may be, for example, the user responding to the telephone call by pressing a dial key or the like, the user returning the telephone call that was placed and conversing with an operator, replying to a message, marking a message as read, or the like. Further, the content of the reaction may take into consideration a positive reply regarding payment, whether or not there is a reply regarding an intended date of payment, or the like. In a case in which the reaction by the user was made by voice, the emotions and so forth of the user can be determined on the basis of the voice of the user, and determination can be made regarding whether or not the reaction was positive. Also, the priority of operation conditions for the next time may be adjusted from the emotions and so forth of the user determined on the basis of the voice.

Also, the priority of operation conditions may be adjusted on the basis of an element other that those described above. For example, the priority of operation conditions may be raised for users whose payment settings for credit card usage are revolving credit, installment payments, and so forth, as compared to single-payment users, and the priority of operation conditions may be raised for users whose credit card usage includes cash advance as compared to users regarding which cash advance is not included. Also, the priority of operation conditions can be adjusted in accordance with transaction data other than credit cards of the object user (i.e., balance data of account used for withdrawal of credit card usage amount, history data of transactions in group banks, and so forth). Now, the condition outputting unit 24 may adjust various types of threshold values corresponding to various types of scores shown in Fig. 4, on the basis of terms of usage of credit cards, for example.

### [Reference Signs List]

- 1: information processing apparatus

## Claims

1. An information processing apparatus, comprising:
an effect estimating unit that estimates an effect that a predetermined operation, directed to a user to prompt the user to execute a predetermined action, has on whether or not the user executes the action; and
a condition outputting unit that outputs a condition relating to the operation directed to the user, on the basis of the effect that is estimated.

2. The information processing apparatus according to claim 1, wherein
the condition outputting unit outputs the condition that yields higher priority, with regard to the operation directed to the user of which the effect that is estimated is higher.

3. The information processing apparatus according to claim 1 or 2, wherein
the effect estimating unit estimates the effect of the operation, using a machine learning model that outputs, in response to an input of one or a plurality of attributes regarding the user, a score indicating the effect of the operation directed to the user.

4. The information processing apparatus according to claim 3, wherein
the effect estimating unit estimates the effect of the operation using the machine learning model generated using a machine learning framework based on ensemble learning.

5. The information processing apparatus according to claim 4, wherein
the effect estimating unit estimates the effect of the operation using the machine learning model generated using the machine learning framework based on a gradient boosting decision tree.

6. The information processing apparatus according to claim 4 or 5, wherein
the machine learning model is created on the basis of training data, in which a score based on statistics relating to an execution rate of the action by users that received the operation, out of a plurality of users having a predetermined attribute, and statistics relating to the execution rate of the action by users that did not receive the operation, out of the plurality of users, is defined as a score indicating the effect of the operation directed to users having the attribute.

7. The information processing apparatus according to any one of claims 1 to 6, further comprising:
a risk estimating unit that estimates a risk based on a probability that the user will not execute the action, wherein
the condition outputting unit outputs the condition relating to the operation, on the basis of the effect and the risk that are estimated.

8. The information processing apparatus according to claim 7, wherein
the condition outputting unit outputs the condition that yields higher priority with regard to at least part of the operation directed to the user of which the effect that is estimated is higher and the operation directed to the user of which the risk that is estimated is higher.

9. The information processing apparatus according to claim 7 or 8, wherein
the condition outputting unit outputs the condition that yields lower priority with regard to at least part of the operation directed to the user of which the effect that is estimated is lower and the operation directed to the user of which the risk that is estimated is lower.

10. The information processing apparatus according to any one of claims 7 to 9, wherein
the condition outputting unit does not output the condition that yields higher priority with regard to the operation directed to the user of which the risk that is estimated is lower than a first threshold value.

11. The information processing apparatus according to any one of claims 7 to 10, wherein
the condition outputting unit does not output the condition that yields lower priority with regard to the operation directed to the user of which the risk that is estimated is higher than a second threshold value.

12. The information processing apparatus according to any one of claims 7 to 11, wherein
the effect estimating unit estimates the effect of the operation regarding the user of which the risk is estimated to be a third threshold value or higher, and does not estimate the effect of the operation regarding the user of which the risk is estimated to be lower than the third threshold value.

13. The information processing apparatus according to any one of claims 1 to 12, wherein
the condition relating to the operation is at least one of whether or not there is a need to execute the operation, a count of times of execution of the operation, an order of execution of the operation, a means of contacting the user in the operation, and/or content at the time of contacting the user in the operation.

14. The information processing apparatus according to any one of claims 1 to 13, wherein
the effect estimating unit estimates a first effect that a first operation directed to the user to prompt the user to execute the predetermined action has on whether or not the user executes the action, and a second effect that a second operation directed to the user to prompt the user to execute the predetermined action has on whether or not the user executes the action, and
the condition outputting unit outputs the condition relating to the operation directed to the user, on the basis of the first effect and the second effect that are estimated.

15. The information processing apparatus according to claim 14, wherein
the condition outputting unit outputs the condition including whether to perform the first operation or to perform the second operation with regard to the user, on the basis of the first effect and the second effect that are estimated.

16. A method of a computer executing:
an effect estimating step of estimating an effect that a predetermined operation, directed to a user to prompt the user to execute a predetermined action, has on whether or not the user executes the action; and
a condition outputting step of outputting a condition relating to the operation directed to the user, on the basis of the effect that is estimated.

17. A program that causes a computer to function as:
an effect estimating unit that estimates an effect that a predetermined operation, directed to a user to prompt the user to execute a predetermined action, has on whether or not the user executes the action; and
a condition outputting unit that outputs a condition relating to the operation directed to the user, on the basis of the effect that is estimated.

18. A method of a computer executing:
a training data acquisition step of acquiring training data, in which a score based on statistics relating to an execution rate of a predetermined action by a user that received a predetermined operation, out of a plurality of users having a predetermined attribute, and statistics relating to the execution rate of the action by a user that did not receive the operation, out of the plurality of users, is defined as a score indicating the effect of the operation directed to users having the attribute; and
a machine learning step of creating a machine learning model on the basis of the training data.

19. An information processing apparatus, comprising: an effect estimating unit that estimates an effect that the operation, directed to a user to prompt the user to execute the action, has on whether or not the user executes the action, using the machine learning model created by the method according to claim 18.
